(19) Europäisches Patentamt
European Patent Office
Office européen des brevets

(11) **EP 2 352 774 B1**

(12) **EUROPÄISCHE PATENTSCHRIFT**

(45) Veröffentlichungstag und Bekanntmachung des Hinweises auf die Patenterteilung:
**27.03.2013 Patentblatt 2013/13**

(21) Anmeldenummer: **09751805.4**

(22) Anmeldetag: **03.11.2009**

(51) Int Cl.:
**C08G 18/00** *(2006.01)*    **C08G 18/42** *(2006.01)*
**C08G 63/00** *(2006.01)*

(86) Internationale Anmeldenummer:
**PCT/EP2009/007852**

(87) Internationale Veröffentlichungsnummer:
**WO 2010/051962 (14.05.2010 Gazette 2010/19)**

(54) **VERFAHREN ZUR HERSTELLUNG VON POLYESTERPOLYOLEN MIT GERINGEN MENGEN AN DIOXANABFALL**

METHOD FOR PRODUCING POLYESTER POLYOLS HAVING LOW AMOUNTS OF DIOXANE WASTE

PROCÉDÉ POUR PRODUIRE DES POLYESTER-POLYOLS EN LIMITANT LES REJETS DE DIOXANE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **06.11.2008 DE 102008056148**

(43) Veröffentlichungstag der Anmeldung:
**10.08.2011 Patentblatt 2011/32**

(73) Patentinhaber: **Bayer MaterialScience AG**
**51368 Leverkusen (DE)**

(72) Erfinder:
• **ROERS, Rolf**
  **51519 Odenthal (DE)**
• **NEFZGER, Hartmut**
  **50259 Pulheim (DE)**
• **BAUER, Erika**
  **41363 Jüchen (DE)**
• **VAN DE BRAAK, Johannes**
  **53773 Hennef (DE)**
• **SCHLOSSMACHER, Jürgen**
  **50126 Bergheim (DE)**
• **HEINEMANN, Thorsten**
  **42799 Leichlingen (DE)**

(56) Entgegenhaltungen:
**WO-A-2006/053051**

• **DATABASE WPI Week 200405 Thomson Scientific, London, GB; AN 2004-046304 XP002567207 & JP 2003 128767 A (KAO CORP) 8. Mai 2003 (2003-05-08)**
• **DATABASE WPI Week 198149 Thomson Scientific, London, GB; AN 1981-90492D XP002567208 & SU 777 045 B (MASLOSH V Z) 7. November 1980 (1980-11-07)**

**Beschreibung**

Die vorliegende Erfindung betrifft die Herstellung und Verwendung von Polyesterpolyolen aufgebaut aus wenigstens einem Carbonsäureanhydrid und Diethylenglykol, wobei durch eine spezielle Reaktionsführung die Bildung von 1,4-Dioxan aus Diethylenglykol weitgehend unterdrückt wird.

Polyesterpolyole sind wichtiger Bestandteil vieler geschäumter und nicht geschäumter Polyurethansysteme. Polyesterpolyole, wie sie zur Bildung von Polyurethanen Verwendung finden, weisen ganz überwiegend Hydroxylendgruppen auf, die einer weiteren Reaktion mit Isocyanatgruppen zugänglich sind. Die Molmasse der Polyesterpolyole liegt typischerweise im Bereich von 200 - 5000 Dalton. Ihre Herstellung erfolgt hauptsächlich durch Polykondensation von Polycarbonsäuren, insbesondere Dicarbonsäuren, und Polyolen, insbesondere Diolen, dadurch dass unter entwässernden Bedingungen Carboxyl- und Hydroxylgruppen unter Bildung von Estergruppen zur Reaktion gebracht werden. Alternativ können auch Anhydride von Polycarbonsäuren, beispielsweise Phthalsäureanhydrid, verwendet werden.

Entwässernde Bedingungen können beispielsweise durch das Anlegen von Vakuum, dem Ausblasen des Reaktionswassers mittels eines Inertgasstromes oder dem azeotropen Auskreisen mittels eines Schleppmittels erreicht werden (Houben-Weyl, Methoden der organischen Chemie, Band 14/2, Makromolekulare Stoffe, Thieme Verlag Stuttgart, Hrsg. E. Müller, S. 1- 47, 1963).

Dem Fachmann ist bekannt, dass bei der Veresterung der aromatischen Phthalsäure, meist eingesetzt in Form von Phthalsäureanhydrid, mit Diethylenglykol unerwünschterweise 1,4-Dioxan als Nebenprodukt entsteht. Das entstandene Dioxan wird bei der Produktion in technischen Anlagen zusammen mit dem Reaktionswasser ausgetragen und muss danach beispielsweise in Kläranlagen abgebaut werden oder nach Aufkonzentrierung verbrannt werden. Durch diesen zusätzlichen Verfahrensschritt erhöhen sich die Kosten der Polyesterpolyol-Produktion.

Das als Nebenprodukt entstehende 1,4-Dioxan führt auch dazu, dass die Ausbeute an gewünschtem Produkt vermindert wird, da ein Teil des eingesetzten Diethylenglykols nicht in den dargestellten Polyester eingebaut wird, sondern wie beschrieben in Form von 1,4-Dioxan an dem Reaktionsgemisch entfernt wird. Daher ergibt sich aus der Bildung von 1,4-Dioxan ein gravierender wirtschaftlicher Nachteil.

Weiterhin kann die Menge an 1,4-Dioxan, die von einer Produktionsanlage hergestellt werden darf, durch Konzessionsvorgaben begrenzt sein. Die Begrenzung der Menge an Dioxan führt damit in diesen Fällen indirekt zur Begrenzung der Produktionskapazität einer Anlage zur Herstellung von Polyesterpolyolen.

Eine Aufgabe der vorliegenden Erfindung ist es daher, ein Verfahren zur Herstellung von Polyesterpolyen, aufgebaut aus wenigstens einem Carbonsäureanhydrid und Diethylenglykol zur Verfügung zu stellen, das die Nachteile aus dem Stand der Technik überwindet.

Insbesondere ist es eine Aufgabe der vorliegenden Erfindung bei der Herstellung von Polyesterpolyolen aus wenigstens einem Carbonsäureanhydrid und Diethylenglykol die Menge an entstehendem Dioxan im Bezug auf die Menge an eingesetztem Diethylenglykol zu begrenzen. Dabei lässt sich die Menge an Dioxan auf unter 7 g pro kg, bevorzugt auf unter 5 g pro kg, eingesetztem Diethylenglykol begrenzen.

Eine weitere Aufgabe der vorliegenden Erfindung ist es bei der Herstellung von Polyesterpolyolen aus wenigstens einem Carbonsäureanhydrid und Diethylenglykol die Menge an entstehendem Dioxan im Bezug auf die Menge des gebildeten Polyesterpolyols zu reduzieren. Dabei lässt sich die Menge an Dioxan auf unter 4 g pro kg, bevorzugt auf unter 3 g pro kg, gebildetem Polyesterpolyol begrenzen.

Die vorstehend genannte Aufgabe wird durch ein Verfahren zur Herstellung von Polyesterpolyolen gelöst, wobei in einem Schritt

a) wenigstens ein Carbonsäureanhydrid (A) und Diethylenglykol (B) vermischt und abreagiert werden, wobei das Molverhältnis der Komponenten (B) zu (A) im Bereich von 1,5 zu 1,0 bis 0,7 zu 1,0 liegt und der Gewichtsanteil der Komponenten (A) und (B) bezogen auf das Gewicht aller Komponenten der Mischung im Bereich zwischen 66 bis 90 Gew.- % liegt,
und in einem Schritt

b) zu dem Polyesterpolyol aus Schritt a) Diethylenglykol (B) zugesetzt wird,

wobei das Polyesterpolyol aus Schritt a) eine höhere Molmasse als das Polyesterpolyol aus Schritt b) aufweist, dadurch gekennzeichnet, dass in Schritt a) wenigstens ein weiteres $C_2$-$C_4$ Glykol (C), ausgenommen Diethylenglykol, und wenigstens eine aliphatische $C_5$ - $C_{12}$ Dicarbonsäure (D) oder wenigstens ein $C_5$ - $C_{10}$ Glykol (E) und wenigstens eine $C_4$ Dicarbonsäure (F) zugesetzt werden.

Die Mengen der Komponenten (C), (D), (E) und (F) in Schritt a) werden so gewählt, dass sich die Mengen aller Komponenten (A), (B), (C) und (D) bzw. (E) und (F) in der Mischung zu 100 Gew.-% ergänzen.

In einer bevorzugten Ausführungsform ist das Carbonsäureanhydrid (A) aromatisch.

Vorzugsweise wird das Carbonsäureanhydrid (A) ausgewählt aus der Gruppe bestehend aus Phthalsäureanhydrid, Trimellitsäureanhydrid und Pyromellitsäureanhydrid. Besonders bevorzugt ist das Carbonsäureanhydrid Phthalsäureanhydrid.

Durch den Austausch kleiner Mengen aromatischer Dicarbonsäuren gegen eine äquivalente Menge einer aliphatischen Dicarbonsäure (D oder F) und den Austausch kleiner Mengen Diethylenglykol gegen äquivalente Mengen der Glykole (C) oder (E), verringert sich die Menge an Dioxanabfall bei der Herstellung der Polyesterpolyole weit über das durch den Verdünnungseffekt zu erwartendem Maß hinaus. Dabei bleiben die Eigenschaften des hergestellten Polyesterpolyols nahezu gleich, das heißt Polyesterpolyole, die nach dem erfindungsgemäßem Verfahren hergestellt werden, weisen die gleichen Eigenschaften auf wie entsprechende Polyesterpolyole, die ohne Zusatz von aliphatischen Dicarbonsäuren (D oder F) und ohne Zusatz der Glykole (C) oder (E) hergestellt wurden.

Vorzugsweise wird das $C_2$-$C_4$ Glykol (C) ausgewählt aus der Gruppe bestehend aus Ethylenglykol, 1,3-Propandiol, 2-Methyl-1,3-propandiol, 1,2-Propandiol. Besonders bevorzugt ist das $C_2$-$C_4$ Glykol (C) Ethylenglykol.

Vorzugsweise wird die aliphatische $C_5$-$C_{12}$ Dicarbonsäure (D) ausgewählt aus der Gruppe bestehend aus Glutarsäure, Adipinsäure, Pimelinsäure, Korksäure, Azelainsäure, Sebacinsäure, Undecandisäure und Dodecandisäure. Besonders bevorzugt ist als $C_5$-$C_{12}$ Dicarbonsäure (D) Adipinsäure oder Sebacinsäure.

Vorzugsweise wird das $C_5$-$C_{10}$ Glykol (E) ausgewählt aus der Gruppe bestehend aus 1,5-Pentandiol, 3-Methyl-1,5-pentandiol, 1,6-Hexandiol und 1,8-Octandiol. Besonders bevorzugt ist das $C_5$-$C_{10}$ Glykol (E) 3-Methyl-1,5-pentandiol oder 1,6-Hexandiol.

Vorzugsweise ist die $C_4$ Dicarbonsäure (F) ausgewählt aus der Gruppe bestehend aus Bernsteinsäure, Fumarsäure und Maleinsäure. Besonders bevorzugt ist die $C_4$ Dicarbonsäure (F) Bernsteinsäure.

Vorzugsweise erfolgt die Nachdosierung des Diethylenglykols (B) in Schritt b) und die Äquilibrierung ins Polyestergleichgewicht so, dass die Verteilung der einzelnen Oligomeren des Polyesterpolyols der Flory-Oligomeren-Verteilungsfunktion entspricht (P.J.Flory, Principles of Polymer-Chemistry, Cornell University Press, Ithaca 1953, Seite 317 fortfolgende). Im Flory-Gleichgewicht befindliche Polyesterpolyole eines vorgegebenen Typs weisen immer die gleiche Oligomeren-Verteilung auf und ergeben somit konsistente Materialeigenschaften im Bezug auf die daraus hergestellten Polyurethan-Werkstoffe.

Die Nachdosierung des Diethylenglykol (B) erfolgt im Schritt b) bei beliebiger Temperatur sowohl des Zwischenproduktes aus Schritt a) als auch des zuzusetzenden Diethylenglykols. Vorzugsweise weißt das nachzusetzende Diethylenglykol eine Temperatur von Raumtemperatur bis 60°C auf, das Zwischenprodukt des Schrittes a) eine erhöhte Temperatur von 120 bis 200°C. Das Diethylenglykol (B) wird unter Laborbedingungen im Stickstoffgegenstrom zugegeben, unter technischen Bedingungen vorzugsweise durch Anlegen von Vakuum in den Kessel eingezogen. Die Menge des nachzusetzenden Diethylenglykol (B) wird durch die OH-Zahl des Produktes aus Schritt a) und die OH-Zahl des angestrebten Endproduktes sowie aus der Ansatzgröße nach folgender Formel (1) bestimmt:

$$\text{Nachsatz Diethylenglykol (B) in g} = (Z - Y)^* M / (1053 - Z) \qquad (1)$$

wobei
Z für die Ziel OH-Zahl nach Schritt b),
Y für die gefundene OH-Zahl aus Schritt a),
M für die Menge an Polyesterpolyol aus Schritt steht und
der Wert 1053 der OH-Zahl Diethylenglykol entspricht.

Der Nachsatz an Diethylenglykol (B) kann sowohl über einen längeren Zeitraum, z.B. über 1 bis 5 Stunden verteilt, kontinuierlich, gleichmäßig oder ungleichmäßig oder in einem Schuss erfolgen.

Vorzugsweise liegt das Molverhältnis (B) zu (A) im Schritt a) im Bereich von 1,2 zu 1,0 bis 0,75 zu 1,0.

Vorzugsweise liegt die Molmasse des aus Schritt a) erhaltenen, Hydroxylgruppen terminierten Polyesterpolyols im Bereich zwischen 1400 und 430, besonders bevorzugt im Bereich zwischen 1120 und 490 g/mol.

Bevorzugt liegt die OH-Zahl des aus Schritt a) erhaltenen Polyesterpolyols im Bereich zwischen 80 und 260 mg KOH/kg, bevorzugt im Bereich zwischen 100 und 230 mg KOH/kg. Die OH-Zahlen, bzw. die Molmassen des Schrittes a.) sind hierbei immer die sich aus den Einsatzstoffen des Schrittes a.) ergebenden theoretischen OH-Zahlen bzw. theoretischen Molmassen, die von der Annahme ausgehen, dass weder Dioxan gebildet wird, noch freies monomeres, niedermolekulares Glykol aus dem Reaktionsansatz ausgetragen wird.

Vorzugsweise liegt die Molmasse des aus Schritt b) erhaltenen Polyesterpolyols im Bereich zwischen 750 und 350, besonders bevorzugt im Bereich zwischen 620 und 370 g/mol.

Vorzugsweise liegt die OH-Zahl des aus Schritt b) erhaltenen Polyesterpolyols im Bereich zwischen 150 und 320 g KOH/kg, bevorzugt im Bereich zwischen 180 - 300 KOH/kg.

Die OH-Zahl wird bestimmt, indem in einer Probe des Polyesterpolyols die Hydroxylendgruppen zunächst mit einem definierten Überschuss eines Anhydrids, z.B. Essigsäureanhydrid zur Umsetzung gebracht werden, das überschüssige Anhydrid hydrolysiert und der Gehalt an freien Carboxylgruppen durch direkte Titration mit einer starken Base, z.B. Natriumhydroxid, ermittelt wird. Die Differenz von in Form des Anhydrids eingebrachten Carboxylgruppen und den experimentell gefundenen Carboxylgruppen ist ein Maß für die Anzahl an Hydroxylgruppen der Probe. Sofern dieser Wert um die Anzahl der in der ursprünglichen Probe infolge nicht ganz vollständiger Veresterung enthaltenen Carboxylgruppen korrigiert wird, d.h. um die Säurezahl, wird die OH-Zahl erhalten. Die meist mit Natriumhydroxid durchgeführten Titrationen werden dabei in die äquivalente Menge Kaliumhydroxid umgerechnet, so dass Säure- und Hydroxylzahlen die Dimension g KOH/kg aufweisen. Zwischen Hydroxylzahl (OH#) und zahlenmittlerem Molekulargewicht (M) besteht dabei folgender rechnerischer Zusammenhang:

$$M = (56100 * F) / OH\#$$

F bedeutet hierbei die zahlenmittlere Funktionalität (wobei sich die Funktionalität auf die Anzahl der Hydroxylgruppen pro Molekül bezieht, auch als Hydroxyl-Funktionalität bezeichnet). Im Allgemeinen kann die Hydroxyl-Funktionalität aus der Rezeptur der Herstellung des Polyesterpolyols berechnet werden.

Vorzugsweise liegt die Viskosität des aus Schritt b) erhaltenen Polyesterpolyols bei einer Temperatur von 50°C im Bereich zwischen 400 und 3000 mPas, bevorzugt im Bereich zwischen 450 und 1500 mPas.

Die Viskosität wird mit Hilfe eines Kegel-Platte-Viskosimeters, z.B. Physica MCR 51 der Fa. Anton Paar, bestimmt, wobei auf Scherrate Null extrapoliert wird. Erfindungsgemäße Polyole sind weitestgehend nicht strukturviskos.

Vorzugsweise liegt der Gewichtsanteil der Komponenten (A) und (B) bezogen auf das Gewicht aller Komponenten im Bereich zwischen 66 und 90 Gew.-%, besonders bevorzugt im Bereich zwischen 70 und 85 Gew.-%.

Die aus Schritt b) erhaltenen Polyesterpolyole weisen Säurezahlen im Bereich von 0,5 bis 3,5 mg KOH/g auf.

Die Funktionalität F der aus Schritt b) erhaltenen Polyesterpolyole liegt vorzugsweise im Bereich von 1,9 bis 3. Funktionalitäten größer 2 werden dadurch erhalten, dass Bausteine mit Funktionalitäten größer 2, beispielsweise Triole oder Tetraole und/oder Tri- oder Tetracarbonsäuren und/oder trifunktionelle Hydroxycarbonsäuren bei der Veresterung anteilig mit verwendet werden. Typische Vertreter sind Glycerin, 1,1,1; Trimethylolpropan, Pentaerythrit, Trimellitsäure, Trimesinsäure, Äpfelsäure, Weinsäure, Zitronensäure, Dimethylolpropionsäure, etc. Bevorzugt lässt sich eine Funktionalität F im Bereich von 2,0 bis 2,3 durch Verwendung von Glycerin oder 1,1,1-Trimethylolpropan einstellen. Dabei weicht die bei 25°C gemessene Viskosität um weniger als 20% von dem Wert für die Viskosität ab, der für ein Funktionalitäts- und Hydroxylzahl-gleiches Polyesterpolyol gemessen wird, das neben der funktionalitätserhöhenden Komponente (beispielsweise 1,1,1-Trimethylolpropan) ausschließlich aus Phthalsäureanhydrid und Diethylenglykol aufgebaut ist.

Vorzugsweise wird ein Vakuumverfahren zur Herstellung der erfindungsgemäßen Polyesterpolyole bei Drücken im Bereich von Normaldruck bis 5 mbar Endvakuum, bevorzugt bis 10 mbar Endvakuum, und Temperaturen im Bereich von 100 - 230, bevorzugt 180 bis 215 °C durchgeführt.

Vorzugsweise wird das Verfahren zur Herstellung der erfindungsgemäßen Polyesterpolyole durchgeführt, indem alle Komponenten des Schrittes a) gleichzeitig vorgelegt werden und zunächst unter Normaldruck unter Verwendung eines Schutzgases bei Temperaturen im Bereich von 100 bis 230 °C, besonders bevorzugt bei Temperaturen im Bereich von 180 bis 215 °C, solange kondensiert wird bis kein Reaktionswasser mehr abdestilliert und anschließend, gegebenenfalls nach Zusatz eines Veresterungskatalysators, der Druck im Verlauf von 1 bis 4 Stunden auf unterhalb von 20 mbar vermindert wird und schließlich bei Temperaturen im Bereich von 180 bis 215 °C und vollem Wasserstrahlvakuum polykondensiert wird, bis eine Säurezahl von unter 5 g KOH/kg erhalten wird.

Zur Herstellung der erfindungsgemäßen Polyesterpolyole können alle dem Fachmann bekannten Katalysatoren verwendet werden. Bevorzugt werden Zinn-(II)-chlorid und Titan-tetraalkoxylate verwendet.

Die Umsetzung der Komponenten zur Herstellung des erfindungsgemäßen Polyesterpolyols erfolgt vorzugsweise in Substanz.

Alternativ können die Polyesterpolyole auch durch das Stickstoffblasverfahren hergestellt werden, bei dem das Kondensat durch einen Stickstoffstrom aus dem Reaktionsgefäß ausgetragen wird (J.H. Saunders und H.T. Frisch in Polyurethanes: Chemistry and Technology, Part I. Chemistry, Interscience published John Wiley and Sons, New York 1962, Seite 45).

Ein weiterer Gegenstand der vorliegenden Erfindung ist ein Verfahren zur Herstellung eines PUR-PIR-Schaumstoffes umfassend die Schritte

    a) Umsatz eines Polyesterpolyols erhältlich nach dem vorstehend beschriebenen Verfahren mit

    b) einer polyisocyanathaltigen Komponente,

    c) einem Treibmittel,

    d) einem oder mehreren Katalysatoren

e) gegebenenfalls Flammschutzmitteln und/oder weiteren Hilfs- und Zusatzstoffen.

Eine polyisocyanathaltige Komponente umfasst Polyisocyanate.

Bei den verwendeten Polyisocyanaten handelt es sich um auf dem Polyurethangebiet üblichen Isocyanate. In Betracht kommen im Allgemeinen aliphatische, cycloaliphatische, arylaliphatische und aromatische mehrwertige Isocyanate. Bevorzugt werden aromatische Di- und Polyisocyanate verwendet. Bevorzugte Beispiele sind 2,4- und 2,6-Toluylendiisocyanat, sowie beliebige Gemische dieser Isomeren, 2,2'-, 2,4'- und 4,4'-Diphenylmethandiisocyanat sowie beliebige Gemische dieser Isomeren, Mischungen aus 2,2'-, 2,4'-, 4,4'-Diphenylmethan-diisocyanaten (Zweikem-MDI) und Polyphenylen-polymethylen-polyisocyanaten (MDI). Alternativ können auch Gemische aus Toluylendiisocyanaten und MDI eingesetzt werden.

Als Treibmittel können allgemein bekannte chemisch oder physikalisch wirkende Verbindungen eingesetzt werden. Als chemisch wirkendes Treibmittel kann bevorzugt Wasser eingesetzt werden. Beispiele für physikalische Treibmittel sind (cyclo)aliphatische Kohlenwasserstoffe mit 4 bis 8 Kohlenstoffatomen, sowie HFKW und HFCKW, die unter den Bedingungen der Polyurethanbildung verdampfen. In einer bevorzugten Ausführungsform werden Pentan und Cyclopentan, sowie Gemische aus Pentan und Cyclopentan als Treibmittel verwendet.

Die Menge der eingesetzten Treibmittel richtet sich überwiegend nach der angestrebten Dichte der Schaumstoffe. Im Allgemeinen wird Wasser von 0 bis 5 Gew.% bezogen auf die Gesamtrezeptur, bevorzugt von 0,1 bis 3 Gew.% verwendet. Im Allgemeinen kann ferner physikalisch wirkendes Treibmittel von 0 bis 8 Gew.%, bevorzugt von 0,1 bis 5 Gew.%, verwendet werden. Als Treibmittel kann auch Kohlendioxid eingesetzt werden, das vorzugsweise als Gas in den Ausgangskomponenten gelöst wird.

Als Katalysatoren für die Herstellung der erfindungsgemäßen Polyurethan- bzw. Polyisocyanurat-Schaumstoffe werden die üblichen und bekannten Polyurethan- bzw. Polyisocyanuratbildungskatalysatoren eingesetzt, beispielsweise organische Zinnverbindungen, wie Zinndiacetat, Zinndioctoat, Dibutylzinndilaurat und/oder stark basische Amine wie 2,2,2-Diazabicyclooctan, Triethylamin oder vorzugsweise Triethylendiamin oder Bis(N,N-Dimethylaminoethyl)ether, sowie zur Katalyse der PIR-Reaktion Kaliumacetat und aliphatische quaternäre Ammoniumsalze.

Die Katalysatoren werden vorzugsweise in einer Menge von 0,1 bis 3 Gew.%, vorzugsweise 0,5 bis 2 Gew.%, bezogen auf das Gesamtgewicht aller Komponenten eingesetzt.

Die Umsetzung der vorstehend genannten Komponenten erfolgt gegebenenfalls in Anwesenheit von Hilfs- und/oder Zusatzstoffen, wie beispielsweise Zellreglern, Trennmitteln, Pigmenten, Verstärkungsstoffen wie Glasfasern, oberflächenaktiven Verbindungen und/oder Stabilisatoren gegen oxidativen, thermischen, hydrolytischen, mikrobiellen Abbau oder Alterung. Die Polyurethanschaumstoffe weisen üblicherweise eine Dichte von 20 bis 250 g/l, vorteilhafterweise von 25 bis 150 g/l, besonders bevorzugt von 30 bis 100 g/l, ganz besonders bevorzugt von 35 bis 75 g/l auf.

Zur Herstellung des erfindungsgemäßen Polyurethanschaumstoffes werden im Allgemeinen alle Komponenten über übliche Hoch- oder Niederdruckmischköpfe vermischt in solchen Mengen so zur Umsetzung gebracht, dass das Äquivalentverhältnis der NCO-Gruppen zur Summe der reaktiven Wasserstoffatome im Falle reiner PUR-Schäume im Bereich zwischen 0,80 zu 1,00 bis 1,60 zu 1,00, vorzugsweise im Bereich zwischen 0,90 zu 1,00 bis 1,15 zu 1,00 liegt. Ein Verhältnis von 1,00 zu 1,00 entspricht hierbei einem NCO-Index von 100.

Im Falle von PUR/PIR-Schäumen liegt das Äquivalentverhältnis der Summe an NCO-Gruppen zu reaktiven Wasserstoffatome im Bereicht zwischen 1,60 zu 1,00 bis 5,00 zu 1,00, vorzugsweise zwischen 2,00 zu 1,00 zu bis 4,00 zu 1,00.

Ein weiterer Gegenstand der vorliegenden Erfindung ist die Verwendung von Polyesterpolyolen, die nach dem vorstehend beschriebenen Verfahren hergestellt werden, zur Herstellung von Polyurethan. Polyurethan ist ein vielseitiger Werkstoff, der in vielen Bereichen Anwendung findet. Auf Grund der großen Vielfalt der verwendbaren Rohstoffe können Produkte mit den unterschiedlichsten Eigenschaften hergestellt werden, beispielsweise Hartschäume zur Dämmung, Blockweichschäume für Matratzen, Formweichschäume für Autositze und Sitzkissen, Akustikschäume zur Schalldämmung, thermoplastische Schäume, Schuhschäume oder mikrozelluläre Schäume, aber auch kompakte Giesssysteme und thermoplastische Polyurethane.

Ein weiterer Gegenstand der vorliegenden Erfindung ist die Verwendung eines PUR/PIR-Schaumstoffes, der nach dem vorstehend beschriebenen Verfahren erhalten wurde, zur Herstellung von Metallverbundelementen.

Metallverbundelemente sind Sandwich-Verbundelemente, bestehend aus wenigstens zwei Deckschichten und einer dazwischen liegenden Kernschicht. Im Besonderen bestehen Metall-Schaumstoff-Verbundelemente wenigstens aus zwei Deckschichten aus Metall und einer Kernschicht aus einem Schaumstoff, z.B. einem Polyurethan (PUR)-Hartschaumstoff, bzw. aus einem Polyurethan/Polyisocyanurat (PUR/PIR)-Hartschaumstoff. Derartige Metall-Schaumstoff-Verbundelemente sind aus dem Stand der Technik hinlänglich bekannt und werden auch als Metallverbundelemente bezeichnet. Zwischen der Kernschicht und den Deckschichten können weitere Schichten vorgesehen sein. Beispielsweise können die Deckschichten, z.B. mit einem Lack, beschichtet werden.

Beispiele für die Anwendung derartiger Metallverbundelemente sind ebene oder linierte Wandelemente sowie profilierte Dachelemente für den Industriehallen- und Kühlhausbau ebenso wie für LKW-Aufbauten, Hallentüren oder Transportcontainer.

Die Herstellung dieser Metallverbundelemente kann kontinuierlich oder diskontinuierlich erfolgen. Vorrichtungen zur kontinuierlichen Herstellung sind z.B. aus DE 1 609 668 A oder DE 1 247 612 A bekannt.

In einer weiteren Ausführungsform des erfindungsgemäßen Verfahrens sind in der Polyolkomponente A) das Polyesterpolyol A1) in einem Anteil von ≥60 bis ≤70 Gewichtsteilen, das Polyetherpolyol A2) in einem Anteil von ≥1 bis ≤10 Gewichtsteilen und das Polyesterpolyol A3) in einem Anteil von ≥1 bis ≤5 Gewichtsteilen enthalten. Mit einer solchen Polyolrezeptur lassen sich zähe Schaumstoffe mit befriedigender Haftund und guter Maßhaltigkeit herstellen.

Ein Beispiel für eine Rezeptur der Polyolkomponente A) im erfindungsgemäßen Verfahren ist:

| | |
|---|---|
| Polyesterpolyol A1): | ≥60 bis ≤70 Gewichtsteile |
| Polyetherpolyol A2): | ≥1 bis ≤10 Gewichtsteile |
| Polyesterpolyol A3): | ≥1 bis ≤5 Gewichtsteile |
| Flammschutzmittel TCPP: | ≥15 bis ≤25 Gewichtsteile |
| Flammschutzmittel TEP: | ≥1 bis ≤5 Gewichtsteile |
| Siliconhaltiger Stabilisator: | ≥2 bis ≤8 Gewichtsteile |
| Carbonsäuresalz (PIR-Katalysator): | ≥3 bis ≤10 Gewichtsteile |
| Treibmittel: | n-Pentan |

Die vorliegende Erfindung betrifft weiterhin einen Polyurethanschaum/Polyisocyanuratschaum, welcher durch ein erfindungsgemäßes Verfahren erhältlich ist. Zu Details einzelner Ausführungsformen wird zur Vermeidung unnötiger Wiederholungen auf die Erläuterungen des erfindungsgemäßen Verfahrens verwiesen.

Der erfindungsgemäße Schaum kann beispielsweise eingesetzt werden in Form von Harstschaum zur Dämmung, in Form von Blockweichschaum für Matratzen, Formweichschaum für Autositze und Sitzkissen, Akustikschaum zur Schalldämmung, als thermoplastischer Schaum, Schuhschaum oder als mikrozellulärer Schaum.

In einer Ausführungsform des erfindungsgemäßen Polyurethan/Polyisocyanuratschaums weist dieser eine Dichte von ≥30 kg/m$^3$ bis ≤50 kg/m$^3$ auf. Die Dichte wird gemäß DIN EN ISO 3386-1-98 bestimmt. Vorzugsweise liegt die Dichte in einem Bereich von ≥33 kg/m$^3$ bis ≤340 kg/m$^3$ und besonders bevorzugt von ≥35 kg/m$^3$ bis ≤38 kg/m$^3$

Metallverbundelemente sind Sandwich-Verbundelemente, bestehend aus wenigstens zwei Deckschichten und einer dazwischen liegenden Kernschicht. Im Besonderen umfassen Metall-Schaumstoff-Verbundelemente wenigstens eine Deckschicht aus Metall und einer Kernschicht aus einem Schaumstoff, zum Beispiel einem Polyurethan (PUR)-Hartschaumstoff, beziehungsweise aus einem Polyurethan-Polyisocyanurat (PUR-PIR)-Hartschaumstoff. Derartige Metall-Schaumstoff-Verbundelemente sind aus dem Stand der Technik hinlänglich bekannt und werden auch als Metallverbundelemente bezeichnet. Geeignete Metalle sind beispielsweise Stahl und Aluminium.

Beispiele für die Anwendung derartiger Metallverbundelemente sind ebene oder linierte Wandelemente sowie profilierte Dachelemente für den Industriehallen- und Kühlhausbau ebenso wie für LKW-Aufbauten, Hallentüren oder Transportcontainer.

Die Herstellung dieser Metallverbundelemente kann kontinuierlich oder diskontinuierlich erfolgen. Vorrichtungen zur kontinuierlichen Herstellung sind z.B. aus DE 1 609 668 oder DE 1 247 612 bekannt.

Unter Verwendung des erfindungsgemäßen Polyurethan/Polyisocyanuratschaums (PUR/PIR) hergestellte Metallverbundelemente können beispielsweise gemäß EN 13823 einen Wert für die Gesamtrauchentwicklung nach 600 Sekunden TSP$_{600}$ von ≥45 m$^2$ bis ≤60 m$^2$ aufweisen. Der TSP$_{600}$-Wert kann auch ≥46 m$^2$ bis ≤58 m$^2$ oder ≥47 m$^2$ bis ≤55 m$^2$ betragen. Weiterhin können solche Metallverbundelemente gemäß EN 13823 einen Wert für die Rauchentwicklung SMOGRA von ≥1 m$^2$/s$^2$ bis ≤10 m$^2$/s$^2$, bevorzugt von ≥2 m$^2$/s$^2$ bis ≤8 m$^2$/s$^2$, besonders bevorzugt von ≥3 m$^2$/s$^2$ bis ≤6 m$^2$/s$^2$ aufweisen.

Ein weiterer Gegenstand der vorliegenden Erfindung ist ein Metallverbundelement, umfassend eine Metallschicht und eine einen erfindungsgemäßen Polyurethan/Polyisocyanuratschaum umfassende Schicht. Näheres zu Metallverbundelementen wurde bereits im Zusammenhang mit der Verwendung des erfindungsgemäßen Schaums ausgeführt.

In einer Ausführungsform des erfindungsgemäßen Metallverbundelements weist dieses einen Wert für die Gesamtrauchentwicklung nach 600 Sekunden TSP$_{600}$ von ≥45 m$^2$ bis ≤60 m$^2$, bevorzugt von ≥46 m$^2$ bis ≤58 m$^2$, besonders bevorzugt von ≥47 m$^2$ bis ≤55 m$^2$ auf.

In einer weiteren Ausführungsform des erfindungsgemäßen Metallverbundelements weist dieses einen Wert für die Rauchentwicklung SMOGRA von ≥1 m$^2$/s$^2$ bis ≤10 m$^2$/s$^2$, bevorzugt von ≥2 m$^2$/s$^2$ bis ≤8 m$^2$/s$^2$, besonders bevorzugt von ≥3 m$^2$/s$^2$ bis ≤6 m$^2$/s$^2$ auf.

Der SMOGRA-Wert, der TSP$_{600}$-Wert , der THR$_{600}$-Wert und der FIGRA-Wert werden gemäß der Norm EN 13823 bestimmt.

Die vorliegende Erfindung wird anhand der nachfolgenden Beispiele näher erläutert.

Beispiele

Zusammenstellung der in den Beispielen verwendeten Rohstoffe

| Phthalsäureanhydrid (PSA): | Technisches PSA der Fa. Lanxess Deutschland GmbH |
|---|---|
| Adipinsäure: | Adipinsäure der Fa. BASF |
| Diethylenglykol (DEG): | DEG der Fa. Ineos |
| Ethylenglykol (EG): | EG der Fa. Ineos |
| Zinn-II-Chlorid-dihydrat | der Fa. Aldrich |

Verwendete Analysenmethoden:

Viskosimeter:    MCR 51 der Fa. Anton Paar

A) Herstellung der Polyesterpolyole

Beispiel 1 (einstufiges Standardverfahren, Vergleich):

In einem 4-Liter 4-Halskolben, ausgestattet mit Heizpilz, mechanischem Rührwerk, Innenthermometer, 40 cm-Füllkörper-Kolonne, Kolonnenkopf, absteigendem Intensivkühler und Trockeneis gekühlter Vorlage, sowie Membranvakuumpumpe wurden unter Stickstoffüberschleierung bei 140°C 1437,1 g (9,71 Mol) PSA vorgelegt und 1737,3 g (16,39 Mol) Diethylenglykol langsam zugegeben. Nach 1 Stunde wurde die Temperatur auf 180°C erhöht, 65 mg Zinn-II-Chlorid-dihydrat eingerührt, der Druck auf 700 mbar verringert. Im Verlauf weiterer 5 Stunden wurde der Druck kontinuierlich auf zuletzt 45 mbar verringert. Man erhöhte die Temperatur auf 200°C, den Druck auf 115 mbar und vervollständigte die Reaktion bis zu einer Gesamtlaufzeit von 27 Std. Während der gesamten Umsetzung wurden Destillate in einer mit Trockeneis gekühlten Vorlage gesammelt. Man bestimmte die Menge an entstandenem 1,4-Dioxan gaschromatographisch zu 17,6 g.
Analyse des Polyesters:

Hydroxylzahl: 234 mg·KOH/g
Säurezahl: 1,6 mg KOH/g
Viskosität: 11300 mPas (25°C), 930 mPas (50°C), 190 mPas (75°C)
Menge gebildeten Polyester Polyols: 2982 g
Menge an Dioxan bezogen auf Menge Polyester Polyol: 17,6 g / 2,982 kg = 5,92 g Dioxan/kg Polyester
Menge an Dioxan bezogen auf Menge eingesetzten Diethylenglykols: 17,6 g / 1,738 kg = 10,16 g Dioxan/kg Diethylenglykol

Beispiel 2 (2-stufiges Verfahren, erfindungsgemäß):

In einer Apparatur nach Beispiel 1 wurden unter Stickstoffüberschleierung bei 180°C 1444 g (9,76 Mol) PSA vorgelegt und 1193 g (11,26 Mol) Diethylenglykol langsam zugegeben. Nach 1 Stunde wurde die Temperatur auf 150°C erniedrig. Es wurden 356 g (2,44 Mol) Adipinsäure und 429 g (6,92 Mol) EG zugeben und bei 200°C für 3 Stunden abreagiert. Es wurden 65 mg Zinn-II-Chlorid-dihydrat zugegeben und der Druck auf 300 mbar verringert. Im Verlauf weiterer 5 Stunden verringerte man kontinuierlich den Druck auf zuletzt 80 mbar vervollständigte die Reaktion bis zu einer Gesamtlaufzeit von 21 Std. Während der gesamten Umsetzung wurden Destillate in einer mit Trockeneis gekühlten Vorlage gesammelt. Man bestimmte die Menge an entstandenem 1,4-Dioxan gaschromatographisch zu 4,8 g, die Hydroxylzahl zu 199 mg KOH/g (berechnet: 212 mg KOH/g), setzte 160 g (1,51 Mol) Diethylenglykol nach und äquilibrierte bei Normaldruck und 200°C für 5 Stunden.
Analyse des Polyesters:

Hydroxylzahl: 239,7 mg KOH/g
Säurezahl: 2,1 mg KOH/g

Viskosität: 8700 mPas (25°C), 820 mPas (50°C), 180 mPas (75°C)
Menge gebildeten Polyester Polyols: 3315 g
Menge an Dioxan bezogen auf Menge Polyesterpolyol: 4,8 g / 3,315 kg = 1,45 g Dioxan/kg Polyester
Menge an Dioxan bezogen auf Menge eingesetzten Diethylenglykols: 4,8 g / 1,353 kg = 3,55 g Dioxan/kg Diethylenglykol

Im Folgenden werden folgende Bezeichnungen verwendet:

"Masse Ester, theoret." bedeutet die theoretische Ausbeute an Polyesterpolyol (ohne Nebenreaktionen) berechnet aus den eingesetzten Mengen an Ausgangsstoffen.
"Masse Ester, ohne Dioxan" bedeutet die experimentell bestimmte Menge an erhaltenem Polyesterpolyol

Tabelle 1: Vergleichsbeispiel 1 und erfindungsgemäße Beispiele 2 bis 5 für Polyesterpolyole mit Hydroxylzahlen im Bereich von 230 bis 260 mg KOH/g.

Als Katalysator wurden jeweils 20 ppm Zinn-II-chlorid-dihydrat verwendet.

| Beispiel | | 1 (Vergleich) | 2 | 3 | 4 | 5 |
|---|---|---|---|---|---|---|
| Fahrweise (Herstellverfahren) | | 1-stufig | 2-stufig | 2-stufig | 2-stufig | 2-stufig |
| Phthalsäureanhydrid (PSA) | [mol] | 9,71 | 9,76 | 10,45 | 9,76 | 9,76 |
| | [g] | 1437,1 | 1444,5 | 1546,6 | 1444,5 | 1444,5 |
| Diethylenglykol (DEG) | [mol] | 16,39 | 11,26 | 10,45 | 9,76 | 8,26 |
| | [g] | 1737,3 | 1193,5 | 1107,7 | 1034,5 | 875,6 |
| Adipinsäure | [mol] | | 2,44 | 1,49 | 2,44 | 2,44 |
| | [g] | | 356,2 | 217,5 | 356,2 | 356,2 |
| Ethylenglykol (EG) | [mol] | | 6,92 | 5,97 | 6,92 | 6,92 |
| | [g] | | 429 | 370 | 429 | 429 |
| DEG (Nachsatz in Stufe b.)) | [mol] | | 1,51 | 2,9 | 3,32 | 4,43 |
| | [g] | | 160,1 | 307,4 | 351,9 | 469,6 |
| Verhältnis DEG/PSA, Stufe a) | [mol/mol] | 1,69 | 1,15 | 1,00 | 1,00 | 0,85 |
| Anteil (DEG+PSA), Gesamt | [Gew.-%] | 100 | 78,1 | 83,4 | 78,3 | 78,0 |
| Anteil (DEG+PSA), Stufe a) | [Gew.-%] | Entfällt | 77,1 | 81,9 | 75,9 | 74,7 |
| Hydroxylzahl | [mg KOH/g] | 234 | 239,7 | 232 | 235 | 258,7 |
| Säurezahl | [mg KOH/g] | 1,6 | 2,3 | 0,5 | 0,7 | 1,2 |
| Max. Reaktionstemperatur | [°C] | 200 | 200 | 200 | 200 | 200 |
| Laufzeit | [Std] | 27 | 27 | 35 | 38 | 27 |
| Dioxan, gefunden (abdestilliert) | [g] | 17,6 | 4,8 | 5,2 | 4,9 | 2,3 |
| Diethylenglykol-Einsatzmenge | [g] | 1737 | 1354 | 1415 | 1386 | 1345 |
| Masse Ester, theoret. | [g] | 3000 | 3320 | 3308 | 3353 | 3311 |
| Masse Ester, ohne Dioxan | [g] | 2982 | 3315 | 3302 | 3348 | 3309 |
| g Dioxan/kg Polyesterpolyol | [g Dioxan/ kg Polyesterpolyol] | 5,92 | 1,45 | 1,59 | 1,47 | 0,70 |
| g Dioxan/kg Diethylenglykol | [g Dioxan / kg Diethylenglykol] | 10,16 | 3,55 | 3,70 | 3,54 | 1,72 |
| Viskosität (bei 50°C) | [mPas] | 930 | 820 | 1060 | 850 | 920 |

DEG = Diethylenglykol - PSA = Phthalsäureanhydrid

Tabelle 2: Vergleichsbeispiel 6 und erfindungsgemäßes Beispiel 7 für Polyesterpolyole mit Hydroxylzahlen im Bereich von 280 bis 300 mg, KOH/g,

Als Katalysator wurden jeweils 20 ppm Zinn-II-chlorid-dihydrat verwendet.

| Beispiel | 6 (Vergleich) | 7 |
|---|---|---|
| Fahrweise (Herstellverfahren) | 1-stufig | 2-stufig |

(fortgesetzt)

Als Katalysator wurden jeweils 20 ppm Zinn-II-chlorid-dihydrat verwendet.

| Beispiel | | 6 (Vergleich) | 7 |
|---|---|---|---|
| Phthalsäureanhydrid (PSA) | [mol] | 9,35 | 9,64 |
| | [g] | 1383,8 | 1426,7 |
| Diethylenglykol (DEG) | [mol] | 17,85 | 9,64 |
| | [g] | 1892,1 | 1021,8 |
| Adipinsäure | [mol] | | 2,41 |
| | [g] | | 351,9 |
| Ethylenglykol (EG) | [mol] | | 7,41 |
| | [g] | | 459,4 |
| DEG (Nachsatz in Stufe b.)) | [mol] | | 1,34 |
| | [g] | | 142,0 |
| Verhältnis DEG/PSA, Stufe a) | [mol/mol] | 1,91 | 1,0 |
| Anteil (DEG+PSA), Gesamt | [Gew.-%] | 100 | 76,2 |
| Anteil (DEG+PSA), Stufe a) | [Gew.-%] | Entfällt da 1- stufig | 75,1 |
| Hydroxylzahl | [mg KOH/g] | 296 | 282 |
| Säurezahl | [mg KOH/g] | 3,2 | 3,2 |
| Max. Reaktionstemperatur | [°C] | 200 | 200 |
| Laufzeit | [Std] | 30 | 24 |
| Dioxan, gefunden | [g] | 16,7 | 2,5 |
| Diethylenglykol-Einsatzmenge | [g] | 1892 | 1164 |
| Masse Ester, theoret. | [g] | 3108 | 3142 |
| Masse Ester, ohne Dioxan | [g] | 3091 | 3139 |
| g Dioxan/kg Polyesterpolyol | [g Dioxan / kg Polyesterpolyol] | 5,40 | 0,81 |
| g Dioxan/kg Diethylenglykol | [g Dioxan / kg Diethylenglykol] | 8,83 | 2,18 |
| Viskosität (bei 50°C) | [mPas] | 440 | 540 |
| DEG = Diethylenglykol - PSA = Phthalsäureanhydrid | | | |

Aus den Tabellen 1 und 2 wird klar ersichtlich, dass der Dioxananfall bei Anwendung des erfindungsgemäßen Verfahrens sehr deutlich verringert werden kann. So entstehen beispielsweise nach dem Standardverfahren gem. Vergleichsbeispiel 6 pro kg gebildeten Polyesterpolyols 5,40 g Dioxan oder bezogen auf die eingesetzte Diethylenglykol-Menge 8,83 g Dioxan, während im erfindungsgemäßen Beispiel 7 lediglich noch 0,81 g Dioxan pro kg Polyesterpolyol bzw. nur noch 2,18 g Dioxan pro kg eingesetzten Diethylenglykols entstehen.

Von gleicher Güte sind die Effekte für die in der Tabelle 1 aufgeführten Varianten, die sich von den Beispielen der Tabelle 2 im Wesentlichen in der OH-Zahl des Polyesterpolyols unterscheiden.

B. Beispiele zur Herstellung eines PUR/PIR-Hartschaums:

Beispiele 8 - 10:

Eingesetzte Komponenten:

(a) Polyesterpolyole aus dem Vergleichsbeispiel 1 (Vglbsp. 1) bzw. den erfindungsgemäßen Beispielen 3 bzw. 4
(b) TCPP, Tris(1-chloro-2-propyl)-phosphat der Fa. Lanxess GmbH, Deutschland.
(c) TEP, Triethylphosphat der Fa. Levagard.
(d) Additiv 1132 der Fa. Bayer MaterialScience, enthaltend das Umsetzungsprodukt von Phthalsäureanhydrid und Diethylenglykol mit einer Säurezahl von ca. 97 mg KOH/g.
(e) PET V 657, trifunktionelles, auf 1,1,1-Trimethyolpropan gestartetes Polyethylenoxidpolyol mit einer Molmasse von ca. 660 Da. der Fa. Bayer MaterialScience AG.

(f) Stabilisator, Polyetherpolysiloxancopolymerisat der Fa. Evonik.

Das in Tabelle 3 angegebene Schäumzusatzmittel (b-f) besteht aus 20 Gewichtsteilen Komponente (b), 5 Gewichtsteilen Komponente (c), 2,2 Gewichtsteilen Komponente (d), 5 Gewichtsteilen Komponente (e) und 4 Gewichtsteilen Komponente (f).

| Aktivator (g) | Carbonsäuresalz (PIR-Katalysator): Desmorapid® VP.PU 30HB13 der Fa. Bayer MaterialScience AG, Leverkusen, Deutschland. |
| Isocyanat: (h) | Desmodur® VP.PU 44V70L, polymeres Polyisocyanat auf Basis 4,4'-Diphenylmethandiisocyanat mit einem NCO-Gehalt von ca. 31,5 Gew.-% der Fa. Bayer MaterialScience AG, Leverkusen, Deutschland. |

Im Labormaßstab werden alle Rohstoffe der Hartschaumrezeptur mit Ausnahme der Polyisocyanatkomponente in einem Pappbecher eingewogen, auf 23°C temperiert, mittels eines Pendraulik-Laborrnischers (z.B. Type LM-34 der Fa. Pendraulik) vermischt und verflüchtigtes Treibmittel (Pentan) ggf. ergänzt. Anschließend wurde unter Rühren die Polyisocyanatkomponente (ebenfalls auf 23°C temperiert) zur Polyolmischung gegeben, diese intensiv vermischt und das Reaktionsgemisch in Formen gegossen, die mit einer metallischen Deckschichten (Fa. Corus) ausgelegt sind. Nach 2,5 Minuten wurde die Schaumhärte mittels einer Eindruck-Methode und nach 8-10 Minuten die maximale Kemtemperatur bestimmt. Es wurde für mindestens weitere 24 Stunden bei 23°C nachreagieren gelassen und anschließend folgende Eigenschaften bestimmt:

BVD-Test entsprechend Schweizer Grundtest zur Ermittlung des Brennbarkeitsgrades von Baustoffen der Vereinigung kantonaler Feuerversicherungen in der Ausgabe von 1988, mit den Nachträgen von 1990, 1994,1995 und 2005. (zu beziehen bei Vereinigung kantonaler Feuerversicherungen, Bundesstr. 20, 3011 Bern, Schweiz).

| Haftung: | Wird bestimmt, indem die beschäumte Deckschicht abgeschält und die benötigte Kraft dafür mittels Federwaage ermittelt wurde |
| Störung: | Visuelle Beurteilung auf Lunkerbildung nach Abreißen der Deckschicht. Es wurden "keine" (keine Lunker auf einer Fläche von 1m$^2$), "wenig" (bis 5% der Fläche weist Lunker auf) , "mittel" (5 - 20% der Fläche weist Lunker auf) und "starke" Lunkerbildung (mehr als 20% der Fläche weist Lunker auf) unterschieden. |

Tabelle 3: Rezepturen und Eigenschaften der Hartschäume [Tle. steht für Gewichtsteile]

| Beispiel | | **8** | **9** | **10** (Vergleich) |
|---|---|---|---|---|
| Komponente (a): | | | | |
| Polyesterpolyol aus Bsp. 4 | [Tle.] | 63,8 | | |
| Polyesterpolyol aus Bsp. 3 | [Tle.] | | 63,8 | |
| Polyesterpolyol aus Vglbsp. 1 | [Tle.] | | | 63,8 |
| Schäumzusatzmittel (b-f) | [Tle.] | 36,2 | 36,2 | 36,2 |
| Pentan | [Tle.] | 15,6 | 15,5 | 15,6 |
| Aktivator (g) | [Tle.] | 4,7 | 4,7 | 5,6 |
| Desmodur® 44V70L (h) | [Tle.] | 160,0 | 159,0 | 162,0 |
| Eigenschaften der Hartschäume | | | | |
| Brandklasse/Flammenhöhe | [mm] | Kl. 5/100-120 | Kl. 5/100-120 | Kl. 5/100-120 |
| Haftung | [N] | 40 | 40 | 30 |
| Störung | | mittel | mittel | wenig |
| Härte | | 8 | 8 | 5 |
| Kemtemperatur | [°C] | 155 | 158 | 160 |

Beispiele 11 und 12:

Tabelle 4: Rezepturen der PIR-Hartschäume [Tle. steht für Gewichtsteile]

| Beispiel | | | **11** | **12** |
|---|---|---|---|---|
| Komponente (a): | | | | |
| | Polyesterpolyol aus Bsp. 2 | [Tle.] | 64 | 64 |
| | Polyetherpolyol basierend auf TMP und Ethylenoxid, Funktionalität 2, OH-Zahl 240 mg KOH/g | [Tle.] | 5 | 5 |
| | Polyesterpolyol aus Phthalsäureanhydrid und Diethylenglykol, OH-Zahl 795 mg KOH/g | [Tle.] | 2,2 | 2,2 |
| Tris(1-chloro-2-propyl)-phosphat, TCPP (b) | | [Tle.] | 20 | 20 |
| Triethylphosphat,TEP (c) | | [Tle.] | 5 | 5 |
| Stabilisator (f) | | [Tle.] | 4 | 6 |
| Pentan | | [Tle.] | 15 | 15 |
| Aktivator (g) | | [Tle.] | 5 | 5 |
| Desmodur® 44V70L (h) | | | + | + |
| Index (Kennzahl) | | | 360 | 360 |

Die erhaltenen Hartschäume gemäß den Beispielen 11 und 12 zeigten bei Dichten (ISO 845) im Bereich von 40-41 kg/m$^3$. folgendes Eigenschaftsprofil:

Zugfestigkeiten: 0,14 N/mm$^2$ (DIN 53292), Zugmodul (DIN 53292): 6,4 N/mm$^2$
Druckspannung: (DIN 53291): 0,15 N/mm$^2$, Druckmodul (DIN 53291): 4,3 N/mm$^2$
Scherfestigkeit (DIN 12090): 0,19 N/mm$^2$ und Schubmodul (DIN 12090): 3,8 N/mm$^2$

Der erfindungsgemäßen Hartschäume aus den Beispielen 11 und 12 wurden weiterhin bezüglich des Brandverhaltens im Single Burning Item (SBI)-Test gemäß EN 13823 überprüft. Hierzu wurden handelsübliche Metallverbundelemente mit Metallverbundelementen enthaltend den erfindungsgemäßen Hartschaum gemäß Beispiel 11 bzw. 12 (siehe Beispiele 17 bzw. 18) sowie mit Vergleichsschäumen (Vergleichsbeispiele 13 bis 16) hergestellt und dem Test unterworfen. Es wurden die in der nachfolgenden Tabelle 5 dargestellten Ergebnisse erhalten:

Tabelle 5: Zusammensetzung und Eigenschaften der Metallverbundelemente

| Beispiel | 13 (Vergleich) | 14 (Vergleich) | 15 (Vergleich) | 16 (Vergleich) | 17 | 18 |
|---|---|---|---|---|---|---|
| Schaumsystem Paneltyp | PUR B2 | PUR B2 | PIRA | PIR B | PIR C aus Beispiel 11 | PIR D aus Beispiel 12 |
| Polyolbasis des Schaumsystems | Polyetherpolyol | Polyetherpolyol | Mischung aus Polyesterpolyol (nicht erfindungsgemäß) und Polyetherpolyol | Polyesteretherol | Polyesterpolyol gemäß-Beispiel 2 | Polyesterpolyol gemäß-Beispiel 2 |
| OH-Zahl | 340 | 340 | 240 | 170 | 180 | 180 |
| Index | 140 | 140 | 200 | 330 | 360 | 360 |
| FIGRA [W/s] | 26 | 81 | 42 | 47 | 42 | 29 |
| $THR_{600}$ [MJ] | 3,4 | 7,6 | 4,0 | 3,8 | 3,5 | 2,8 |
| SMOGRA [$m^2/s^2$] | 25 | 58 | 16 | 10 | 9 | 4 |
| $TSP_{600}$[$m^2$] | 293 | 606 | 177 | 143 | 113 | 53 (47)* |
| Klassifizierung | B/S3/D0 | C/S3/D0 | B/S2/D0 | B/S2/D0 | B/S2/D0 | B/S2/D0 |
| *: Wiederholung des Versuchs | | | | | | |

EP 2 352 774 B1

Beim FIGRA-Wert (fire growth rate; Feuerausbreitungsgeschwindigkeit) ist eine Einstufung in die Klasse C unterhalb von 250 W/s und in die Klasse B unterhalb von 120 W/s möglich. Im Fall des $THR_{600}$-Werts (total heat release; Gesamtwärmefreisetzung nach 600 Sekunden) wird ein Wert von weniger als 15 MJ in die Klasse C und von weniger als 7,5 MJ in die Klasse B eingestuft. Ein SMOGRA-Wert (smoke growth rate; Rauchausbreitungsgeschwindigkeit) von weniger als 180 $m^2/s^2$ wird in die Klasse S2 und von weniger als 30 $m^2/s^2$ in die Klasse S 1 eingestuft. Ein $TSP_{600}$-Wert (total smoke production; Gesamtrauchentwicklung nach 600 Sekunden) von weniger als 200 $m^2$ wird in die Klasse S2 und von weniger als 50 $m^2$ in die Klasse S1 eingeordnet

Ein mit dem erfindungsgemäßen Schaum hergestelltes Metallverbundelement (Beispiele 17 bzw. 18) weist innerhalb der getesteten Systeme den mit Abstand niedrigsten $TSP_{600}$-Wert auf. Im Falle des metallverbundelements des Beispiels 18 wurde sogar ein $TSP_{600}$-Wert von 53 und - bei einer Wiederholung des Versuchs - 47 erreicht, womit eine Einstufung in die Klasse S1 sogar möglich ist. Hervorzuheben sind ebenfalls die niedrigen $THR_{600}$- und SMOGRA-Werte. Insgesamt zeigt der erfindungsgemäße Hartschaum folglich ein sehr günstiges Brandverhalten.

**Patentansprüche**

1. Verfahren zur Herstellung von Polyesterpolyolen, wobei in einem Schritt

   a) wenigstens ein Carbonsäureanhydrid (A) und Diethylenglykol (B) vermischt und abreagiert werden, wobei das Molverhältnis der Komponenten (B) zu (A) im Bereich von 1,5 zu 1,0 bis 0,7 zu 1,0 liegt und der Gewichtsanteil der Komponenten (A) und (B) bezogen auf das Gewicht aller Komponenten der Mischung im Bereich zwischen 66 bis 90 Gew.-% liegt,
   und in einem Schritt
   b) zu dem Polyesterpolyol aus Schritt a) Diethylenglykol (B) zugesetzt wird,
   wobei das Polyesterpolyol aus Schritt a) eine höhere Molmasse als das Polyesterpolyol aus Schritt b) aufweist, **dadurch gekennzeichnet, dass** in Schritt a) wenigstens ein weiteres $C_2$-$C_4$ Glykol (C), ausgenommen Diethylenglykol, und wenigstens eine aliphatische $C_5$ - $C_{12}$ Dicarbonsäure (D) oder wenigstens ein $C_5$ - $C_{10}$ Glykol (E) und wenigstens eine $C_4$ Dicarbonsäure (F) zugesetzt werden.

2. Verfahren nach Anspruch 1, **dadurch gekennzeichnet, dass** das Carbonsäureanhydrid (A) ausgewählt wird aus der Gruppe bestehend aus Phthalsäureanhydrid, Trimellitsäureanhydrid und Pyromellithsäureanhydrid, bevorzugt ist das Carbonsäureanhydrid Phthalsäureanhydrid.

3. Verfahren nach Anspruch 1 oder 2, **dadurch gekennzeichnet, dass** das $C_2$ - $C_4$ Glykol (C) ausgewählt wird aus der Gruppe bestehend aus Ethylenglykol, 1,3-Propandiol, 2-Methyl-1,3-propandiol, 1,2-Propandiol, besonders bevorzugt ist das $C_2$-$C_4$ Glykol (C) Ethylenglykol.

4. Verfahren nach einem oder mehreren der Ansprüche 1 bis 3, **dadurch gekennzeichnet, dass** die aliphatische $C_5$ - $C_{12}$ Dicarbonsäure (D) ausgewählt wird aus der Gruppe bestehend aus Glutarsäure, Adipinsäure, Pimelinsäure, Korksäure, Azelainsäure, Sebacinsäure, Undecandisäure und Dodecandisäure, bevorzugt ist als die $C_5$ - $C_{12}$ Dicarbonsäure (D) Adipinsäure oder Sebacinsäure.

5. Verfahren nach einem oder mehreren der Ansprüche 1 bis 4, **dadurch gekennzeichnet, dass** das $C_5$ - $C_{10}$ Glykol (E) ausgewählt wird aus der Gruppe bestehend aus 1,5-Pentandiol, 3-Methyl-1,5-pentandiol, 1,6-Hexandiol und 1,8-Octandiol.

6. Verfahren nach einem oder mehreren der Ansprüche 1 bis 5, **dadurch gekennzeichnet, dass** die $C_4$ Dicarbonsäure (F) ausgewählt wird aus der Gruppe bestehend aus Bernsteinsäure, Fumarsäure und Maleinsäure.

7. Verfahren nach einem oder mehreren der Ansprüche 1 bis 6, **dadurch gekennzeichnet, dass** das Molverhältnis der Komponenten (B) zu (A) im Bereich von 1,2 zu 1,0 bis 0,75 zu 1,0 liegt.

8. Verfahren nach einem oder mehreren der Ansprüche 1 bis 7, **dadurch gekennzeichnet, dass** die sich aus den Einsatzmengen ergebende OH-Zahl (theoretische OHZ) des aus Schritt a) erhaltenen Polyesterpolyols im Bereich zwischen 80 und 260 KOH/kg liegt.

9. Verfahren nach einem oder mehreren der Ansprüche 1 bis 8, **dadurch gekennzeichnet, dass** die OH-Zahl des aus Schritt b) erhaltenen Polyesterpolyols im Bereich zwischen 150 - 320 g KOH/kg liegt.

10. Verfahren nach einem oder mehreren der Ansprüche 1 bis 9, **dadurch gekennzeichnet, dass** der Gewichtsanteil der Komponenten (A) und (B) bezogen auf das Gewicht aller Komponenten im Bereich zwischen 66 und 90 Gew.-% liegt.

11. Verfahren zur Herstellung eines Polyurethan (PUR)- oder Polyisocyanuratschaum (PIR)-Schaumstoffes umfassend die Schritte

 a) Umsatz eines Polyesterpolyols erhältlich nach einem oder mehreren der Ansprüche 1 bis 10 mit
 b) einer polyisocyanathaltigen Komponente,
 c) einem Treibmittel,
 d) einem oder mehreren Katalysatoren
 e) gegebenenfalls Flammschutzmitteln und/oder weiteren Hilfs- und Zusatzstoffen.

**Claims**

1. Process for the production of polyester polyols wherein in a step

 a) at least one carboxylic anhydride (A) and diethylene glycol (B) are mixed and reacted,
 wherein the molar ratio of components (B) to (A) is in the range from 1.5:1.0 to 0.7:1.0 and the weight proportion of components (A) and (B) relative to the weight of all components of the mixture is in the range between 66 to 90 wt%,
 and in a step
 b) diethylene glycol (B) is added to the polyester polyol from step a),
 wherein the polyester polyol from step a) has a higher molar mass than the polyester polyol from step b), **characterized in that** step a) comprises adding at least one further $C_2$-$C_4$ glycol (C) except diethylene glycol, and at least one aliphatic $C_5$-$C_{12}$ dicarboxylic acid (D) or at least one $C_5$-$C_{10}$ glycol (E) and at least one $C_4$ dicarboxylic acid (F).

2. Process according to Claim 1, **characterized in that** the carboxylic anhydride (A) is selected from the group consisting of phthalic anhydride, trimellitic anhydride and pyromellitic anhydride, preferably the carboxylic anhydride is phthalic anhydride.

3. Process according to Claim 1 or 2, **characterized in that** $C_2$-$C_4$ glycol (C) is selected from the group consisting of ethylene glycol, 1,3-propanediol, 2-methyl-1,3-propanediol, 1,2-propanediol, particularly preferably the $C_2$-$C_4$ glycol (C) is ethylene glycol.

4. Process according to one or more of Claims 1 to 3, **characterized in that** the aliphatic $C_5$-$C_{22}$ dicarboxylic acid (D) is selected from the group consisting of glutaric acid, adipic acid, pimelic acid, suberic acid, azelaic acid, sebacic acid, undecanedioic acid and dodecanedioic acid, preferably the $C_5$-$C_{12}$ dicarboxylic acid (D) is adipic acid or sebacic acid.

5. Process according to one or more of Claims 1 to 4, **characterized in that** the $C_5$-$C_{10}$ glycol (E) is selected from the group consisting of 1,5-pentanediol, 3-methyl-1,5-pentanediol, 1,6-hexanediol and 1,8-octanediol.

6. Process according to one or more of Claims 1 to 5, **characterized in that** the $C_4$ dicarboxylic acid (F) is selected from the group consisting of succinic acid, fumaric acid and maleic acid.

7. Process according to one or more of Claims 1 to 6, **characterized in that** the molar ratio of components (B) to (A) is in the range from 1.2:1.0 to 0.75:1.0.

8. Process according to one or more of Claims 1 to 7, **characterized in that** the polyester polyol obtained from step a) has a theoretical OH value (OH value resulting from the starting quantities) in the range between 80 and 260 KOH/kg.

9. Process according to one or more of Claims 1 to 8, **characterized in that** the OH number of the polyester polyol obtained from step b) is in the range between 150-320 g KOH/g.

**10.** Process according to one or more of Claims 1 to 9, **characterized in that** the weight proportion of components (A) and (B) relative to the weight of all components is in the range between 66 and 90 wt%.

**11.** Process for producing a polyurethane (PUR) or polyisocyanurate (PIR) foam comprising the steps of

a) reacting a polyester polyol obtainable according to one or more of Claims 1 to 10 with
b) a polyisocyanate-containing component,
c) a blowing agent,
d) one or more catalysts,
e) optionally flame retardants and/or further auxiliary and additive substances.

**Revendications**

**1.** Procédé pour la préparation de polyesterpolyols, dans lequel, dans une étape

a) on mélange et fait totalement réagir au moins un anhydride d'acide carboxylique (A) et du diéthylèneglycol (B), le rapport molaire des composants (B) à (A) se situant dans la plage allant de 1,5:1,0 à 0,7:1,0 et la proportion pondérale des composants (A) et (B) par rapport au poids de tous les composants du mélange se situant dans la plage comprise entre 66 et 90 % en poids,
et dans une étape
b) on ajoute du diéthylèneglycol (B) au polyesterpolyol provenant de l'étape a),
le polyesterpolyol provenant de l'étape a) présentant une masse moléculaire plus élevée que le polyesterpolyol provenant de l'étape b),
**caractérisé en ce que** dans l'étape a) on ajoute au moins un autre glycol en $C_2$-$C_4$ (C), à l'exception du diéthylèneglycol, et au moins un acide dicarboxylique aliphatique en $C_5$-$C_{12}$ (D) ou au moins un glycol en $C_5$-$C_{10}$ (E) et au moins un acide dicarboxylique en $C_4$ (F).

**2.** Procédé selon la revendication 1, **caractérisé en ce que** l'anhydride d'acide carboxylique (A) est choisi dans le groupe constitué par l'anhydride phtalique, l'anhydride trimellitique et l'anhydride pyromellitique, de préférence l'anhydride d'acide carboxylique est l'anhydride phtalique.

**3.** Procédé selon la revendication 1 ou 2, **caractérisé en ce que** le glycol en $C_2$-$C_4$ (C) est choisi dans le groupe constitué par l'éthylèneglycol, le 1,3-propanediol, le 2-méthyl-1,3-propanediol, le 1,2-propanediol, de façon particulièrement préférée le glycol en $C_2$-$C_4$ (C) est l'éthylèneglycol.

**4.** Procédé selon une ou plusieurs des revendications 1 à 3, **caractérisé en ce que** l'acide dicarboxylique aliphatique en $C_5$-$C_{12}$ (D) est choisi dans le groupe constitué par l'acide glutarique, l'acide adipique, l'acide pimélique, l'acide subérique, l'acide azélaïque, l'acide sébacique, l'acide undécanedioïque et l'acide dodécanedioïque, de préférence l'acide dicarboxylique en $C_5$-$C_{12}$ (D) est l'acide adipique ou l'acide sébacique.

**5.** Procédé selon une ou plusieurs des revendications 1 à 4, **caractérisé en ce que** le glycol en $C_5$-$C_{10}$ (E) est choisi dans le groupe constitué par le 1,5-pentanediol, le 3-méthyl-1,5-pentanediol, le 1,6-hexanediol et le 1,8-octanediol.

**6.** Procédé selon une ou plusieurs des revendications 1 à 5, **caractérisé en ce que** l'acide dicarboxylique en $C_4$ (F) est choisi dans le groupe constitué par l'acide succinique, l'acide fumarique et l'acide maléique.

**7.** Procédé selon une ou plusieurs des revendications 1 à 6, **caractérisé en ce que** le rapport molaire des composants (B) à (A) se situe dans la plage allant de 1,2:1,0 à 0,75:1,0.

**8.** Procédé selon une ou plusieurs des revendications 1 à 7, **caractérisé en ce que** l'indice de groupes OH résultant des quantités utilisées (indice OH théorique) du polyesterpolyol obtenu dans l'étape a) se situe dans la plage comprise entre 80 et 260 de KOH/kg.

**9.** Procédé selon une ou plusieurs des revendications 1 à 8, **caractérisé en ce que** l'indice de groupes OH du polyesterpolyol obtenu dans l'étape b) se situe dans la plage comprise entre 150 et 320 de KOH/kg.

**10.** Procédé selon une ou plusieurs des revendications 1 à 9, **caractérisé en ce que** la proportion pondérale des composants (A) et (B) par rapport au poids de tous les composants se situe dans la plage comprise entre 66 et 90 % en poids.

11. Procédé pour la production d'une mousse de polyuréthane (PUR) ou de polyisocyanurate (PIR), comprenant les étapes

a) mise en réaction d'un polyesterpolyol pouvant être obtenu selon une ou plusieurs des revendications 1 à 10 avec
b) un composant contenant un polyisocyanate,
c) un agent d'expansion,
d) un ou plusieurs catalyseurs
e) éventuellement des agents ignifuges et/ou d'autres adjuvants et additifs.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1609668 A
- DE 1247612 A
- DE 1609668
- DE 1247612

**In der Beschreibung aufgeführte Nicht-Patentliteratur**

- Methoden der organischen Chemie. **HOUBEN-WEYL.** Makromolekulare Stoffe. Thieme Verlag, 1963, vol. 14/2, 1-47
- **J.H. SAUNDERS ; H.T. FRISCH.** Polyurethanes: Chemistry and Technology, Part I. Chemistry. Interscience published John Wiley and Sons, 1962, 45